# EUROPEAN PATENT APPLICATION

(11) **EP 2 357 212 A1**
(43) Date of publication of application: **17.08.2011**
(21) Application number: 09827529.0
(22) Date of filing: 16.11.2009
(51) Int. Cl.: C08L 81/02, C08K 3/08, C08L 23/00, F16L 11/04

(54) **POLYARYLENE SULFIDE RESIN COMPOSITION AND FLUID PIPE MATERIAL**

(30) Priority: 21.11.2008 JP 2008297942
(71) Applicant: DIC Corporation, Tokyo 174-8520 (JP)
(72) Inventor: ABE Fumiaki, Ichihara-shi Chiba 290-8585 (JP); NAKASE Hirokiyo, Ichihara-shi Chiba 290-8585 (JP); AIZAWA Shifumi, Ichihara-shi Chiba 290-8585 (JP); YOSHINO Yasuyuki, Ichihara-shi Chiba 290-8585 (JP); MARUYAMA Yutaka, Ichihara-shi Chiba 290-8585 (JP); NAKASHIMA Michiya, Sakura-shi Chiba 285-8668 (JP); AKIBA Kumiko, Sakura-shi Chiba 285-8668 (JP)
(74) Representative: Albrecht, Thomas
(86) International application number: PCT/JP2009/069426
(87) International publication number: WO 2010/058748

(57) **Abstract**

What is offered is: a polyarylene sulfide resin composition which includes 100 mass parts of a polyarylene sulfide resin (A), 0.1 to 8 mass parts of a metal fine particle (B) containing at least one metal species selected from the group consisting of copper, nickel, and zinc, and 0.1 to 5 mass parts of a thermoplastic elastomer (C); and a piping member for fluid obtained by molding of the pertinent resin composition. This piping member for fluid is useful for water-supply pipes, water-heater pipes, and the like in cold weather climates, as it is high in toughness at low-temperature, inhibits damage or rupture of pipes due to freezing, and also inhibits occurrence of creep deformation at high temperature.

## Description

### TECHNICAL FIELD

The present invention relates to a polyarylene sulfide resin composition which exhibits excellent toughness at low temperature, and little deformation at high temperature. It also relates to a piping member for fluid - particularly for pipe joints - which is useful in conveyance of: fluids with flowability such as various types of organic/inorganic fluids, various types of solvents, fuels, various types of gases, liquefied gases, and also various types of raw materials, intermediates, and products pertaining to polymer production; or fluids and the like principally containing water such as potable water, hot water that transits water heaters, as well as fluids for floor heating systems based on hot water, and fertilizer-mixed water supply systems for factory-cultivated vegetables or the like.

### BACKGROUND ART

Previously, metal has been used for pipe member, but demand for plastic pipe member such as high-density polyethylene and cross-linked polyethylene has grown in recent years for purposes of cost reduction, weight reduction and the like. However, the temperature resistance of these polyethylene pipe members is insufficient, and there has been the drawback that looseness occurs particularly in the joints of structures having joints due to the heat of the fluid, and/or that a pipe breaks or ruptures due to freezing.

In response thereto, several pipe members using a polyarylene sulfide resin composition with excellent heat resistance have been proposed. Polyarylene sulfide resin composition has excellent heat resistance, but is poor and brittle in toughness, particularly in ductility, resulting in the problem of damage or rupture due to freezing when used in a pipe member. In response, a pipe member has been proposed which improves performance with respect to damage, rupture or the like due to freezing by using a resin composition in which a thermoplastic elastomer is combined with the polyarylene sulfide resin (e.g., see Patent Documents 1-3).

However, although flexibility and viscosity are imparted to the pertinent resin composition as the additive amount of thermoplastic elastomer increases, and damage, rupture or the like due to freezing improves, there is the problem that temperature resistance declines. That is, as viscosity is imparted due to the addition of thermoplastic elastomer, the problem occurs that creep deformation grows in proportion to the increase in the additive amount. In particular, creep deformation is larger in high-temperature regions. Accordingly, creep deformation begins over time with respect to a pipe member for fluid through which high-temperature (mainly 70°C or more) fluids flow at high pressure - e.g., water heaters -, and the pipe member conforms to external pressure, resulting in the problem that the pipe material itself deforms, and the joining force that unites the pipeline weakens.

### PRIOR ART LITERATURE

### PATENT DOCUMENTS

Patent Document 1: Japanese Unexamined Patent Application, First Publication No. 2001-115020
Patent Document 2: Japanese Unexamined Patent Application, First Publication No. 2004-300271
Patent Document 3: Japanese Unexamined Patent Application, First Publication No. 2006-063255

### DISCLOSURE OF INVENTION

### PROBLEMS THAT THE INVENTION IS TO SOLVE

The problems that the present invention is to solve are to offer a polyarylene sulfide resin composition which can inhibit damage and rupture of pipes due to freezing, and which inhibits occurrence of creep deformation even at high temperature - that is, which has the contradictory performance characteristics of large elongation at low temperature and small elongation at high temperature - and a piping member for fluid which is obtained by molding the pertinent resin composition.

### MEANS FOR SOLVING THE PROBLEMS

The present inventors discovered that by blending polyarylene sulfide resin with respectively prescribed quantities of thermoplastic elastomer and metal fine particle containing prescribed metal species, a polyarylene sulfide resin composition is obtained which is provided with toughness that is able to withstand damage and rupture due to freezing, which can also maintain temperature resistance, and which inhibits occurrence of creep deformation even at high temperature - that is, which has the contradictory performance characteristics of large elongation at low temperature and small elongation at high temperature - and thereby perfected the present invention. Specifically, it was discovered that it is possible to obtain a polyarylene sulfide resin composition which has low-temperature fracture resistance that is capable of inhibiting damage, rupture or the like due to freezing even when the pipe is exposed to open air of extremely low temperature such as -20°C, and which has high-temperature deformation resistance such that hardly any creep deformation occurs even when a fluid of 70°C or higher flows through under high pressure of 1 MPa or higher.

That is, the present invention relates to a polyarylene sulfide resin composition which includes: 100 mass parts of a polyarylene sulfide resin (A); 0.1 to 8 mass parts of a metal fine particle (B) containing at least one metal species selected from the group consisting of copper, nickel, and zinc; and 0.1 to 5 mass parts of a thermoplastic elastomer (C).

### EFFECTS OF THE INVENTION

The polyarylene sulfide resin composition of the present invention inhibits damage and rupture of pipes due to freezing, because it has large elongation at low temperature, that is, it is high in toughness. Consequently, it can be suitably used in pipe material and pipe joints for water supply systems and the like in cold-weather climates. Moreover, as it has small elongation at
high temperature - that is, as it inhibits the occurrence of creep deformation even at high temperature - it can be suitably used in the hot-water pipes of water heaters, the hot-water pipe material, pipe joints and the like of floor heating system pipes using hot water, and so on.

### BEST MODE FOR CARRYING OUT THE INTENTION

The polyarylene sulfide resin composition of the present invention includes: a polyarylene sulfide resin (A), a metal fine particle (B) containing at least one metal species selected from the group consisting of copper, nickel, and zinc, and a thermoplastic elastomer (C) in the predetermined ratio.

There are no particular limitations on the polyarylene sulfide resin (hereinafter "PAS") (A) used in the present invention, and conventional PAS resin may be used. For example, one may cite block copolymers, random copolymers containing repeating units of structures wherein sulfur atoms are bonded with aromatic rings that may have substituents, as well as mixtures thereof or mixtures with homopolymers, and the like.

As a representative example of these PAS resins, one may cite polyphenylene sulfide resin (hereinafter "PPS resin"). Among the PPS resins, those which have structures wherein bonding of the aforementioned repeating unit to the aromatic ring is at the para position are preferable from the standpoints of temperature resistance and crystallinity.

The PAS resin may contain meta bonds, ether bonds, sulfone bonds, sulfide ketone bonds, biphenyl bonds, phenyl sulfide bonds, and naphthyl bonds with an upper limit of less than 10 mol % (however, in the case where trivalent or more components that have bondings are copolymerized, the upper limit is set at 5 mol %). In the present invention, as stated below, it is thought that sulfide (-S-) contributes to functional expression, and use of PAS resin in which these densities are greatly lowered due to copolymerization is unsuitable.

With respect to the PAS resin (A) used in the present invention, it is preferable that the peak molecular weight of molecular weight distribution obtained by gel permeation chromatography, wherein 1-chloronaphthalene is used as a solvent, be 35,000 or higher, because low-temperature toughness is thereby enhanced with respect to a resin composition to which the below-mentioned metal fine particle (B) is added. In order to further enhance toughness at low temperature, it is more preferable that peak molecular weight of the PAS resin be 38,000 or higher; it is still more preferable that it be 40,000-45,000.

Peak molecular weight in the present invention is based upon reduced values obtained as polystyrene standard values using polystyrene as the standard substance in gel permeation chromatograph measurement in the below-described Examples. In contrast to number average molecular weight or mass average molecular weight whose values vary according to the way in which the baseline of the molecular weight distribution curve is obtained in gel permeation chromatography, the values of peak molecular weight are not affected by the manner of obtainment of the baseline of the molecular weight distribution curve.

With respect to melt viscosity of the PAS resin used in the present invention, it is preferable that viscosity that is measured under conditions of 300°C and shear velocity of 500 sec⁻¹ using a capillary rheometer be 100-1000 Pa·s, in order to enhance the low-temperature toughness of a resin composition to which the below-mentioned metal fine particle (B) is added. In order to further enhance toughness at low temperature, it is more preferable that melt viscosity of the PAS resin be 200-500 Pa·s.

There are no particular limitations on the manufacturing method of the PAS resin, and one may cite, for example, 1) a method wherein a dihalogeno-aromatic compound and still another copolymer monomer if necessary are polymerized in the presence of sulfur and sodium carbonate, 2) a method wherein a dihalogeno-aromatic compound and still another copolymer monomer if necessary are polymerized in the presence of a sulfidation agent in a polar solvent, 3) a method wherein p-chlorthiophenol and still another copolymer monomer if necessary undergo self-condensation, 4) a method wherein a sulfidation agent and a dihalogeno-aromatic compound, and still another copolymer monomer if necessary, are reacted in an organic polar solvent; and so on.

Among these methods, the method of 4) is preferable, because the reaction is easy. In order to regulate the degree of polymerization when conducting the reaction, one may add an alkali metal salt of sulfonic acid or carbonic acid, and one may add an alkali hydroxide metal.

With respect to the aforementioned method of 4), it is particularly preferable to obtain the product by a method wherein an aqueous sulfidation agent is introduced into a mixture containing a heated organic polar solvent and a dihalogeno-aromatic compound at a rate which allows removal of the water from the reaction mixture, the dihalogeno-aromatic compound and the sulfidation agent are reacted in the organic polar solvent, and the PAS resin is manufactured by controlling water content in the reaction system within a range of 0.02-0.5 mol relative to 1 mol of the pertinent organic polar solvent (see Japanese Unexamined Patent Application, First Publication No. H07-228699).

With respect to the PAS resin (A), it is preferable to enable achievement of inhibition of creep deformation at high temperature and enhancement of toughness at low-temperature by introducing functional groups such as carboxyl groups, carboxyl group-derivative groups, sulfonic groups, sulfoxide groups, and hydroxy groups into the resin. Among the aforementioned functional groups, carboxyl groups and carboxyl group-derivative groups are preferable from the standpoint of their effects in inhibiting creep deformation at high temperature. The aforementioned carboxyl group-derivative groups are, for example, derivatives of esters, amides, ammonium salts, metal salts and the like obtained by reacting at least one type of compound selected from alcohol, amine, ammonium or metal ion with a carboxyl group; or acid anhydride groups produced from carboxyl groups. Specifically, as the other copolymer monomers used as necessary in the aforementioned 1)-4), ester derivatives, amide derivatives, ammonium salts, metal salts, or acid anhydride groups are used.

As methods for introducing the aforementioned functional groups into the PAS resin (A) - e.g., as methods of manufacturing PAS resin (A) having the aforementioned functional groups - one may cite, for example, the following (a), (b), (c), (d) methods of manufacturing PAS resin (A) using compounds having the aforementioned functional groups.

(a) A method which obtains PAS resin (A) into which an amino group or carboxyl group has been introduced, using a dichlorobenzene derivative having an amino group or carboxyl group as raw material as the aforementioned other copolymer monomer when synthesizing the PAS resin (A)
(b) A method which produces sulfonic groups or sulfoxide groups within the molecules of PAS resin (A) by oxidizing the sulfur portion of the PAS resin (A) by a method such as conducting treatment in an oxidizing liquid of, for example, hydrogen peroxide or aqueous sodium hypochlorite after synthesizing the PAS resin (A)
(c) A method which, in a liquid, reacts the PAS resin (A) and a compound that reacts with PAS resin and that has the aforementioned functional groups, or a compound that reacts with PAS resin and that produces polar groups after reaction
(d) A method which uses a melt-kneading method to react the PAS resin (A) and a compound that reacts with PAS resin and that has the aforementioned functional groups, or a compound that reacts with PAS resin and that produces polar groups after reaction

Among the aforementioned methods, the aforementioned method (d) is preferable from the standpoints that no additional equipment is necessary, and that changeover of raw material is easy. As the compound used when conducting the aforementioned method (c) and the aforementioned method (d) that reacts with PAS resin and that has the aforementioned functional groups, one may specifically cite compounds that have carbon-carbon unsaturated bonds capable of reacting with radicals existing in the molecules of the PAS resin (A) and that have the aforementioned functional groups, and the like. As the compound that reacts with PAS resin and that produces the aforementioned functional groups after reaction, one may specifically cite compounds which have epoxy groups, amino groups, isocyanate groups or the like that react with terminal functional groups of the PAS resin (A), e.g., carboxyl groups, and thiol groups. The epoxy groups, amino groups, and isocyanate groups react with carboxyl groups or thiol groups, and subsequently produce the aforementioned functional groups such as hydroxy groups, amide bonds, and urethane bonds. Among these, compounds are preferable that have carbon-carbon unsaturated bonds capable of reacting with radicals existing in the molecules of the PAS resin (A) and that have the aforementioned functional groups, because they are highly effective in inhibiting creep deformation at high temperature. Compounds that have carboxyl groups or carboxyl group-derivative groups as the aforementioned functional groups are preferable, and as examples of such compounds, one may cite maleic anhydride, sorbic acid, and the like

It is preferable that the amount of the aforementioned functional groups introduced into the PAS resin (A) be 0.1 mass parts to 3 mass parts relative to 100 mass parts of the PAS resin (A), because the balance of the effects of inhibiting creep deformation at high temperature and enhancing toughness at low temperature is then particularly satisfactory.

As to the reason why inhibition of creep deformation at high temperature is enabled by introduction of the aforementioned functional groups into the PAS resin (A), creep deformation at high temperature is inhibited, because intermolecular interaction of the PAS resin (A) is increased due to introduction of the aforementioned functional groups, impeding occurrence of slippage and displacement between molecules. For example, according to the aforementioned method (d), with respect to PAS resin (A) having carboxyl groups obtained by reacting the PAS resin (A) and a compound that has carbon-carbon unsaturated bonds capable of reacting with radicals existing in molecules of the PAS resin (A) and that has carboxyl groups as the aforementioned functional groups, intermolecular interaction of the PAS resin (A) is increased by the hydrogen bonds of the carboxyl groups, thereby inhibiting creep deformation at high temperature. At the same time, toughness at low temperature of PAS resin (A) into which the aforementioned functional groups are introduced is enhanced by intensification of the interaction of the aforementioned functional groups in the PAS resin (A) and the below-mentioned thermoplastic elastomer (C), directly or via other microadditives (e.g., the below-mentioned coupling agents or multifunctional compatibilizing agents).

The metal fine particle (B) used in the present invention is a metal particulate containing at least one metal species selected from a group composed of copper, nickel, and zinc. The aforementioned metal fine particle (B) may be metal particulate composed solely of copper, nickel or zinc, or may be an alloy including at least one of the metal species of copper, nickel or zinc. Such alloys have a tendency to inhibit creep deformation at high temperature in the same manner as metal particulate composed solely of copper, nickel or zinc, and therefore are preferably used. Specifically, it is preferable that the total content of the aforementioned metal species be 80 mass % or higher; 90 mass % or higher is more preferable. As examples of alloys that may be suitably used, one may cite brass, cupronickel, red brass, tombak, nickel silver and the like as alloys whose primary ingredient is copper, and monel and the like as alloys whose primary ingredient is nickel.

As a result of contact of the aforementioned metal fine particle (B) with PAS resin, interaction occurs between the metal species contained in the aforementioned metal fine particle (B) and the sulfide groups (-S-) in the PAS resin, crystallization of the PAS resin is blocked by the moderate binding of the molecular chains of PAS resin, and amorphous portions with high flexibility and pronounced elongation properties increase within the PAS resin, resulting in manifestation of toughness at low temperature. Furthermore, as metal fine particle with a high elastic modulus exists at the centers of the amorphous portions, a fixed elastic modulus can be maintained without excessive flexibility, with the result that creep deformation can be inhibited at high temperature.

Among the metal species contained in the aforementioned metal fine particle (B), the melting point of zinc which has the lowest melting point is 420°C. As the melting point of the metal species contained in the aforementioned metal fin particle (B) is higher than the 350°C which is the upper limit of the melt-kneading temperature of PAS resin, dispersion in PAS resin occurs easily without melting even when kneaded into PAS resin, enabling manifestation of a toughness-enhancing effect at low temperature. Furthermore, the aforementioned metal species can be preferentially used as additives for molded material requiring fixed quantities, because they generally have low toxicity, there are few limitations on the applications of materials obtained by kneading them, and they are inexpensive compared to noble metals.

The content of metal fine particle (B) in the PAS resin composition is in the range of 0.1-8 mass parts relative to 100 mass parts of PAS resin. When the content of the aforementioned metal fine particle (B) is less than 0.1 mass parts, interaction with the aforementioned sulfide groups (-S-) in the PAS resin is insufficient, with the result that the effect of enhancement of low-temperature toughness is insufficient. When in excess of 8 mass parts, the aforementioned metal fine particle (B) becomes the origin of fractures at low temperature, low-temperature toughness declines, and moldability declines due to the decrease in fluidity when the PAS resin composition melts. Furthermore, in order to strive for coexistence of inhibition of creep deformation at high temperature and enhancement of toughness at low temperature while preserving satisfactory moldability, it is preferable that the content of the aforementioned metal fine particle (B) be within a range of 0.3-5 mass parts, and a range of 0.5-3 mass parts is more preferable.

As the average particle size of the aforementioned metal fine particle (B), from the standpoint of application also to a piping member for fluid that has thin-walled portions, it is preferable that average particle size be 20 µm or less. As smaller particle size of the microparticles increases particle surface area per particle mass, this is preferable, because interaction with the aforementioned sulfide groups (-S-) in the PAS resin is facilitated by small additive amounts. Specifically, an average particle size of 10 µm or less is more preferable, 5 µm or less is still more preferable, and 1 µm or less is most preferable, In particular, of the aforementioned metal fine particle, copper and nickel particles are also marketed in an average particle size of 500 nm or less, and these may also be preferentially used. With respect to the lower limit of average particle size of the aforementioned metal fine particle (B), in view of such considerations as ease of kneading with the other components, and dispersibility that does not cause secondary aggregation or the like, 0.01 µm or higher is preferable, and 0.1 µm or higher is more preferable. Otherwise, with respect to the present invention, average particle size of the metal fine particle (B) is measured by dynamic light scattering (DLS).

With respect to the particle form of the aforementioned metal fine particle (B), there are no particular limitations provided that it is a form capable of being worked into a piping member for fluid by injection molding. Any form and material may be used such as spherical, indeterminate, tabular, dendroid, linear, flake, acicular, and short-fiber. Among these forms, spherical is preferable. With respect to particle distribution of the aforementioned metal fine particle, there are no particular limitations, but it is preferable for the above-stated reasons to use material in which many particles are distributed that are smaller than average particle size. It is also preferable to have few particles that are larger than average particle size - e.g., coarse particles of 20 µm or higher. When no such coarse particles exist, it is possible to prevent these coarse particles from constituting the origin of fractures, thereby enabling enhancement of toughness at low temperature, and improvement of freezing resistance. Such coarse particles can be removed by classification treatment.

As the thermoplastic elastomer (C) used in the present invention, it is preferable to employ a substance which melts at the temperature where the PAS resin (A) is kneaded, and which is capable of mixed dispersion. Accordingly, thermoplastic elastomers which have a melting point of 300 °C or less and which have rubber elasticity at room temperature are preferable. Of these, from the standpoints of temperature resistance, ease of mixing, and low-temperature toughness enhancement, those among thermoplastic elastomers (C) which have a glass-transition point of -40°C or less are preferable, because they have rubber elasticity even at low temperatures. As it is preferable when the aforementioned glass-transition point is low, a range of -180°C to -40°C is ordinarily preferable, and a range of - 150°C to -40°C is more preferable.

From the standpoint of low-temperature toughness enhancement, it is preferable that the aforementioned thermoplastic elastomer (C) be thermoplastic elastomer (C) which has at least one functional group selected from the group consisting of epoxy groups, amino groups, hydroxy groups, carboxyl groups, mercapto groups, isocyanate groups, vinyl groups, acid anhydride groups, and ester groups. Furthermore, among these, functional groups that derive from carboxylic acid derivatives such as epoxy groups, acid anhydride groups, carboxyl groups, and ester groups are particularly preferable due to their strong affinity with PAS resin (A).

The aforementioned thermoplastic elastomer (C) may be obtained by copolymerization of, for example, α-olefins and vinyl polymerizable compounds having the aforementioned functional groups. As the aforementioned α-olefins, one may cite, for example, α-olefins with a carbon number of 2-8 such as ethylene, propylene, and butene-1, and the like. As vinyl polymerizable compounds having the aforementioned functional groups, one may cite, for example, α,β-unsaturated carboxylic acids such as (meth)acrylic acid and (meth)acrylic acid ester, and their alkyl esters; α,β-unsatirated dicarboxylic acid and their derivatives such as maleic acid, fumaric acid, itaconic acid and other unsaturated dicarboxylic acids with a carbon number of 4-10, their mono- and diesters, and their acid anhydrides, or glycidyl (meth)acrylate and the like. Otherwise, in the present invention, "(meth)acrylate" signifies either one or both of methacrylate and acrylate, and "(meth)acrylic acid" signifies one or both of methacrylic acid and acrylic acid.

Among these, it is preferable to use ethylene-α-olefin copolymers having within their molecules at least one functional group selected from the group consisting of epoxy groups, amino groups, hydroxy groups, carboxyl groups, mercapto groups, isocyanate groups, vinyl groups, or acid anhydride groups and ester groups, and ethylene-α-olefin copolymers having carboxyl groups are more preferable. Moreover, as the aforementioned ethylene-α-olefin copolymers, ethylene-propylene copolymer or ethylene-butene copolymer is preferable.

The content of the thermoplastic elastomer (C) in the PAS resin composition of the present invention is in a range of 0.1-5 mass parts relative to 100 mass parts of PAS resin. When the content of the aforementioned thermoplastic elastomer (C) is less than 0,1 mass parts, the effect of enhancement of toughness of low-temperature is insufficient, and when in excess of 5 mass parts, there is the problem that creep deformation at high temperature tends to occur. Furthermore, in order to seek coexistence of inhibition of creep deformation at high temperature and enhancement of toughness at low temperature, it is preferable that the content of thermoplastic elastomer (C) be in a range of 0.5-4 mass parts relative to 100 mass parts of PAS resin, and a range of 1-3.5 mass parts is more preferable.

As described above, the amounts of the metal fine particle (B) and the thermoplastic elastomer (C) which are blended in the PAS resin composition of the present invention are important for purposes of seeking coexistence of inhibition of creep deformation at high temperature and enhancement of toughness at low temperature. As the content of the aforementioned thermoplastic elastomer (C) is raised, toughness at low temperature can be enhanced, but on the other hand there is the problem that creep deformation at high temperature increases. In the present invention, the enhancement of low-temperature toughness performed by the aforementioned thermoplastic elastomer (C) is complemented by blending the aforementioned metal fine particle (B) into the PAS resin composition of the present invention, low-temperature toughness can be fully secured even when the content of the aforementioned thermoplastic elastomer (C) is reduced, and creep deformation at high temperature is inhibited by reducing the content of this aforementioned thermoplastic elastomer (C). Accordingly, in order to seek better coexistence of inhibition of creep deformation at high temperature and enhancement of toughness at low temperature, it is preferable that the mass ratio [(B)/(C)] of the metal fine particle (B) and the thermoplastic elastomer (C) in the PAS resin composition of the present invention be in a fixed range. Consequently, it is preferable that the aforementioned mass ratio [(B)/(C)] be in a range of 10:90-65:35, while a range of 10:90-50:50 is more preferable, and a range of 10:90-40:60 is still more preferable.

In addition to the aforementioned PAS resin (A), the aforementioned metal fine particle (B), and the aforementioned thermoplastic elastomer (C) described above, various types of additives may be added to the PAS resin composition of the present invention with the objective of seeking enhancement of mechanical properties, enhancement of molding workability and the like. As such additives, one may cite the following.

For purposes of further enhancing the elastic modulus of the PAS resin composition of the present invention, one may add inorganic fillers to the PAS resin composition used in the present invention. As specific examples, one may cite glass fiber, carbon fiber, calcium titanate, pottasium titanate, silicon carbide, aramid fiber, ceramics fiber, metal fiber, silicon nitride, barium sulfate, calcium sulfate, kaolin, clay, bentonite, sericite, zeolite, mica, talc, wallacetonite, PMF, ferrite, aluminum silicate, calcium silicate, calcium carbonate, dolomite, magnesium, oxide, magnesium hydroxide, antimony trioxide, titanium oxide, iron oxide, milled glass, glass beads, glass balloons, carbon black, and the like.

With respect to the blending amount of these inorganic fillers, as low-temperature toughness may be reduced when excessive, 5 mass % or less in the PAS resin composition is preferable, and 1 mass % or less is more preferable.

For purposes of further enhancing interaction between the various components, one may add to the PAS resin composition of the present invention organic compounds containing one or more and preferably two or more functional groups selected from vinyl groups, hydroxy groups, carboxyl groups, acid anhydride groups of dicarboxylic acid, glycidyl groups, amino groups, isocyanate groups, mercapto groups, oxazoline groups, isocyanurate groups, and maleimide groups. Thermoplastic resin or thermohardening resin having one or more and preferably two or more of at least one type of the aforementioned functional groups is also acceptable.

As specific examples of the aforementioned organic compounds, one may cite, for example, polyvalent alcohols such as ethylene glycol, propanediol, glycerin, diethylene glycol, triethylene glycol, catechol, resorcinol, hydroquinone, bisphenol A, benzenetriol, and benzene tetraol; amino alcohols such as 2-aminoethanol and 3-aminopropanol; mercapto compounds such as ethane dithiol, propane dithiol, 1,2-benzenethiol, 1,3-benzenethiol, and 1,4-benzenethiol; polyvalent glycidyl ethers such as ethylene glycol diglycidyl ether, catechol diglycidyl ether, hydroquinone diglycidyl ether, bisphenol A diglycidyl ether, resorcinol diglycidyl ether, benzenetriol triglycidyl ether, and benzenetetraol tetraglycidyl ether; bis-(2-oxazoline) compounds such as 1,3-phenylenebis-(2-oxazoline), 1,4-phenylenebis-(2-oxazoline), and ethylenebis-(2-oxazoline); diisocyanate compounds such as 1,2-phenylenediisocyanate, 1,3-phenylenediisocyanate, 1,4-phenylenediisocyanate, hexamethylene diisocyanate, and 4,4-diphenylmethane diisocyanate; polycarboxylic acid anhydrides such as trimellitic anhydride, pyromellitic anhydride, 3,3',4,4'-tetracarboxybenzophenone dianhydride, and 4,4'-methylenebis (benzene-1,2-dicarboxylic acid) dianhydride; diamine, compounds such as 1,2-phenylene diamine, 1,3-phenylene diamine, 1,4-phenylene diamine, diaminodiphenyl ether, hexamethylene diamine, and ethylene diamine; and so on. In addition, as thermoplastic resin having organic functional groups, one may cite polyolefin resin containing glycidyl groups, maleic anhydride-modified polyolefin resin, polystyrene resin containing oxazoline groups, polyamide resin, polyester resin, polycaprolactone resin, and the like. As thermohardening resin, one may cite epoxy resin, vinyl ester resin, unsaturated polyester resin, triazine resin, bismaleimide resin, and phenol resin. As preferable organic compounds among these, one may cite polyolefin resin containing glycidyl groups, polystyrene resin containing oxazoline groups, polyamide resin, epoxy resin, and the like.

As the aforementioned organic compounds, one may also add silane coupling agents or titanium coupling agents having one or more types selected from vinyl groups, glycidyl groups, amino groups, isocyanate groups, and mercapto groups.

Furthermore, it is preferable to add a silicone compound to the PAS resin composition of the present invention, because durability relative to acidity and alkalinity is enhanced. As the silicone compound, it is preferable to use polyorganosiloxane that has siloxane bonds in the main chain and that is expressed by a formula R-[SiR₂-O]ₙ-R (R denotes a hydrogen atom or organic group; n is a positive integer of 2 or more). Among these, polydimethylsiloxane wherein R in the aforementioned formula is entirely methyl groups is particularly preferable, but one may also preferentially use a polydimethylsiloxane in which a portion of the pertinent methyl groups are replaced by hydrogen atoms or other substituents.

Here, as said other substituents, one may cite alkyl groups with a carbon atom number of 2 or more, aryl groups, halogenated alkyl groups, silylalkyl groups, polyoxyalkylene groups, and reactive functional groups. In the case where multiple methyl groups are replaced, it is possible to select from among these groups, and use mutually identical or different substituents.

As the aforementioned alkyl groups with a carbon atom number of 2 or more, one may cite, for example, ethyl groups, propyl groups, butyl groups, octyl groups, dodecyl groups, and the like. As aryl groups, one may cite, for example, phenyl groups, tolyl groups, naphthyl groups, and the like. As halogenated alkyl groups, one may cite, for example, fluoropropyl groups, chloropropyl groups, and the like. With respect to silylalkyl groups, one may cite as a specific representative example one that is expressed by the formula -[CH₂]ₙ-Si[OCH₃]₃ (wherein n is a positive integer of 1 or more). With respect to polyoxyalkylene groups, one may cite as a specific representative example one that is expressed by the formula -[CH₂]ₖ-O-[C₂F₄O]₁-[C₃H₆O]ₘ-R₁ (k, 1, m in the formula are 0 or positive integers; R₁ in the formula is a group selected from hydrogen atom, alkyl groups, aryl groups, halogenated alkyl groups, silylalkyl groups, and reactive functional groups).

As specific examples of the aforementioned reactive functional groups, one may cite epoxy groups, amino groups, mercapto groups, vinyl groups, carboxyl groups, hydroxy groups, isocyanate groups, amide groups, acyl groups, as well as nitrile groups, acid anhydride groups, and the like. These reactive functional groups may be directly bonded to the main chain, or may be bonded to the terminus of organic groups such as alkylene groups and polyoxyalkylene groups that are bonded to the main chain. Among these, carboxyl groups, hydroxy groups, epoxy groups, and amino groups are preferable; epoxy groups and amino groups are more preferable.

It is preferable when viscosity of the aforementioned polysiloxane compound is 10-5000 mPa·s (25°C), as it uniformly disperses into the PAS composition used in the present invention. In particular, an oleaginous one within a range of 10-500 mPa·s (25°C) is ideal.

Moreover, it is preferable when a reactive functional group is included in the aforementioned silicone compound, because there is the effect that exuding of the silicone compound - so-called "bleed-out" - in the surface of the molded product is inhibited.

As a method of preparation of the PAS resin composition of the present invention, one may cite, for example, a method of preparation whereby PAS resin (A), metal fine particle (B) containing at least one metal species selected from copper, nickel and zinc, and thermoplastic elastomer (C) are mixed in advance in a Henschel mixer or tumbler or the like, after which the mixture is supplied to a single screw or twin screw extrusion kneader or the like, kneaded at 200°C-360°C, and subsequently pelletized. Use of a twin screw extrusion kneader with unidirectional rotation provided with a kneading disk for kneading is particularly preferable. After pelletization, one may also conduct annealing treatment, and processing treatment such as UV irradiation and plasma irradiation.

As the piping member for fluid of the present invention obtained by molding the aforementioned PAS resin composition can be used with little deformation over a wide temperature range, various types of fluids can be accommodated. Fluids are gases, liquids, supercritical fluids, and the like. One may cite, for example, town gas, propane gas, nitrogen, oxygen, hydrogen, carbon dioxide, helium, neon, argon, halogen gas, water vapor, cold water, hot water, boiling water, geothermal water, various types of organic solvents, coolants, heat medium, acids such as sulfuric acid, alkaline solutions such as aqueous sodium hydroxide, melt polymers, polymer solutions, and the like.

As the piping member for fluid of the present invention, one may cite, for example, piping for the conveyance of fluid and various types of parts that are accessory to piping such as pipes, lining pipes, cap nuts, pipe joints (elbows, headers, tees, reducers, joints, couplers, and the like), various types of valves, flowmeters, gaskets (seals, packing), and the like.

As molding methods of the piping member for fluid of the present invention, one may cite injection molding, extrusion molding, blow molding, press molding, and the like. Injection molding and extrusion molding are particularly preferable. Moreover, the piping member for fluid of the present invention may be of single-layer or multi-layer structure. In the case of a multi-layer structure, one may adopt a multi-layer structure wherein only the employed PAS resin is made into multiple layers, or one may adopt a multi-layer structure with other resins such as the combination of PAS resin and polyamide resin, polyethylene resin or the like.

In the case of injection molding, from the standpoint of mold design, it is preferable to apply a method where bushing is used in the portion which constitutes the flow path of the fluid, and the bushing is removed when the mold is released. In the case where use of bushing is difficult, for example, in the case where a U-shaped pipe or the like is molded, one may adopt a method including an infection molding step in which two or more segments configuring the object are respectively molded by injection molding using the aforementioned PAS resin composition, and a joining step in which the segments molded in the aforementioned injection molding step are reciprocally joined to form the U-shaped pipe or the like. As an example of such a method, one may adopt, for example, the die slide molding method. In the case of a multi-layer structure, one may adopt the two-color molding method.

In the case of extrusion molding, molding is conducted with use of tube dies. In the case of a multi-layer structure, a multi-layer tube can be manufactured by introducing molten resin that is extruded from extruders corresponding to the number of layers or the number of materials into a single multi-layer tube die, and conducting bonding inside the die or immediately after discharge of the die. One may also adopt a method whereby a multi-layer tube is manufactured by temporarily manufacturing a single-layer tube, and then laminating the other layer(s) onto the inner side or outer side. Otherwise, in the case where a multi-layer tube composed of a multi-layer structure of three or more layers is manufactured, it is obtained by appropriately adding extruders, connecting each extruder to a co-extrusion die, and extruding the multi-layer parison.

### Examples

The present invention is described below in further detail with reference to Examples. The peak molecular weights and melt viscosities of the PAS resin obtained in the following manufacturing examples were measured according to the following method.

### (Measurement of peak molecular weight)

The peak molecular weight of the PAS resin was measured using gel permeation chromatography, using 6 types of monodisperse polystyrene for calibration according to the following measurement conditions.
Apparatus: Ultra-High Temperature Distribution Measurement Apparatus for Polymer Molecular Weight ("SSC-7000" manufactured by Senshu Scientific Co., Ltd.)
Column: UT-805L (manufactured by Showa Denko K.K.)
Column temperature: 210°C
Solvent: 1-chloronaphtalene
Measurement method: UV detector (360 nm)

### (Measurement of melt viscosity)

Melt viscosity of the PAS resin was measured using a capillary rheometer under conditions of a temperature of 300°C and shear velocity of 500 sec⁻¹.

### (Manufacturing example 1) Manufacture of PAS resin (A) (PPS-1)

1838 kg (12.5 kilomols) of p-dichlorobenzene (hereinafter abbreviated as "p-DCB"), 4958 kg (50 kilomols) of N-methylpyrrolidone (hereinafter abbreviated as "NMP"), and 90 kg (5.0 kilomols) of water were put at room temperature into a titanium reaction vessel with stirrer blades which was connected with a temperature sensor, cooling tower, drip tank, drip pump, and distillation separating tank. The temperature was raised to 100°C over a period of 20 minutes in a nitrogen atmosphere under stirring, the system was closed, and the temperature was further raised to 220°C over a period of 40 minutes. Internal pressure was controlled at 0.22 MPa at that temperature, and instillation of a liquid mixture of 1500 kg of Na₂S·xH₂O, 225 kg of NaSH·yH₂O and 425 kg of water (Na₂S: 11.4 kilomols, NaSH: 3.2 kilomols, water content: 50.3 mass %) was conducted over a period of 3 hours. Dewatering operations were simultaneously conducted during instillation to remove the water from the reaction system, and the p-DCB that was distilled with the water was continuously returned to an autoclave. The dewatering operations and the operations to return p-DCB were conducted until elevation of temperature to 240°C was completed, and the system was sealed at the time of completion of the temperature rise.

Subsequently, it was retained for 1 hour at the same temperature and pressure, after which internal temperature was raised to 240°C while lowering internal pressure to 0.17 MPa over a period of 1 hour. It was retained for 1 hour at that temperature, the reaction terminated, and cooling was conducted to room temperature. According to the results of analysis of the distilled liquid, water content in the reaction system at the time of reaction termination was 0.17 (mol/mol) relative to the total amount of sulfidation agent employed. The obtained reaction slurry was heated to 120°C under reduced pressure (-0.08 MPa), thereby removing the reaction solvent by distillation. Water was poured onto the residue, and stirring was conducted for 1 hour at 80°C, after which filtration was performed. After stirring this cake with hot water again for 1 hour and washing it, filtration was performed. These operations were repeated 3 times, water was again added, and stirring was conducted for 1 hour at 200°C, after which filtration was performed, and drying was conducted for 10 hours at 120°C in a hot air dryer to obtain a white powdery polymer. This polymer is referred to below as PPS-1. The peak molecular weight of this PPS-1 was 43,700, and melt viscosity was 240 Pa·s.

### (Manufacturing example 2) Manufacture of PAS resin (A) (PPS-2) with carboxyl groups

The PPS-1 obtained in manufacturing example 1 and maleic anhydride were uniformly mixed at PPS-1/maleic anhydride = 99/1 (mass ratio), after which kneading was conducted using a twin screw extruder with a screw diameter of 30 mmϕ and L/D = 52.5, at a preset cylinder temperature of 290-330°C. The discharge strand was pelletized, and PPS resin (PPS-2) with carboxyl groups was obtained. The peak molecular weight of this PPS-2 was 41,500, and melt viscosity was 220 Pa·s.

### (Manufacturing example 3) Manufacture of PAS resin (A) (PPS-3) with carboxyl groups

PPS resin (PPS-3) with carboxyl groups was obtained in the same manner as manufacturing example 2, except that sorbic acid was used instead of maleic anhydride. The peak molecular weight of this PPS-3 was 41,900, and melt viscosity was 210 Pa·s.

### (Example 1) Preparation of PPS resin composition (1)

0.5 mass parts of copper fine particle (manufactured by Mitsui Mining & Smelting Co., Ltd.; spherical, with an average particle size of 0.36 µm) as the metal fine particle, (B), 1 mass part of acid anhydride-modified ethylene-butene copolymer ("TAFMER MH-7020" manufactured by Mitsui Chemicals, Inc.) as the thermoplastic elastomer (C) and 0.5 mass parts of cresol novolac type epoxy resin ("Epikuron N-695P" manufactured by DIC Corporation) were added to 100 mass parts of the PPS-1 obtained by manufacturing example 1. After being uniformly mixed, kneading was conducted using a twin screw extruder with a screw diameter of 30 mmϕ and L/D = 52.5, at a preset cylinder temperature of 290-330°C. The discharge strand was pelletized, and the PPS resin composition (1) was obtained.

### (Examples 2-16 and Comparative examples 1-11)

By the same method as Example 1, the PPS resin compositions (2)-(16) and (H1)-(H11) were obtained according to the compositions shown in Tables 1-4. The following evaluations were conducted with respect to the obtained PPS resin compositions.

### <Molding of a piping member for fluid for freezing test>

Respectively using the PPS resin compositions (1)-(16) and (H1)-(H11) obtained in Examples 1-16 and comparative examples 1-11, injection molding was conducted with an in-line screw type injection molder under conditions of a cylinder temperature of 300°C, die temperature of 150°C, and injection pressure of 40-80 MPa, thereby obtaining a sealable cylindrical piping member for fluid (pipe joint) that had flange and screw structures at both ends, and that had an inner diameter of 22 mm and an outer diameter of 28 mm.

Using the piping member for fluid obtained in the foregoing manner, the following freezing test was conducted to evaluate low-temperature fracture resistance.

### <Freezing test>

After filling with water by submergence in water so that no air layer was contained in the piping member for fluid, and sealing the two ends, it was removed from the water, inserted into a -20°C freezer, and left standing for 2 hours to completely freeze the interior water. The number of samples was 10.

### <Evaluation of low-temperature fracture resistance>

The piping member for fluid left in the -20°C freezer was removed, and was visually observed to confirm the presence or absence of cracking. Low-temperature fracture resistance was evaluated by the following criteria based on the number of samples in which cracking did not occur.
Excellent: the number of samples in which cracking did not occur was 8 or more.
Satisfactory: the number of samples in which cracking did not occur was 6 or more and less than 8.
Unsatisfactory: the number of samples in which cracking did not occur was less than 6.

### <Measurement of tensile creep deformation>

Respectively using the PPS resin compositions (1)-(16) and (H1)-(H11) obtained in Examples 1-16 and comparative examples 1-11, ASTM No. 4 dumbbells were fabricated by conducting injection molding with an in-line screw type injection molder under conditions of a cylinder temperature of 300°C, die temperature of 150°C, and injection pressure of 40-80 MPa. Using the pertinent dumbbells, tensile creep deformation was measured in conformity with ASTM D2990.

### <Evaluation of high-temperature deformation resistance>

In the aforementioned measurement of tensile creep deformation, high-temperature deformation resistance was evaluated according to the following criteria based on tensile creep deformation at 80°C, 20 MPa, and 100 hours.
Excellent: tensile creep deformation was 1.5% or less.
Satisfactory: tensile creep deformation exceeded 1.5% and was 2% or less. Unsatisfactory: tensile creep deformation exceeded 2%.

The mixing compositions and aforementioned evaluation results of the PPS resin compositions (1)-(16) and (H1)-(H11) obtained in Examples 1-16 and comparative examples 1-11 are shown in Tables 1-4.

**Table 1**

| Table 1 | | | Example 1 | Example 2 | Example 3 | Example 4 | Example 5 | Example 6 | Example 7 | Example 8 |
|---|---|---|---|---|---|---|---|---|---|---|
| Designation of PPS resin composition | | | (1) | (2) | (3) | (4) | (5) | (6) | (7) | (8) |
| Mixing composition | (A) | PPS-1 | 100 | 100 | 100 | 100 | 100 | 100 | | |
| | | PPS-2 | | | | | | | 100 | |
| | | PPS-3 | | | | | | | | 100 |
| | (B) | Cu | 0.5 | 0.5 | 0.5 | 1.0 | 2.1 | 5.5 | 1.0 | 0.5 |
| | (C) | Ela | 1.0 | 2.1 | 3.1 | 3.1 | 3.2 | 3.3 | 3.1 | 3.1 |
| | Other | ADD-1 | 0.5 | 0.5 | 0.5 | 0.5 | 0.5 | 0.5 | 0.5 | 0.5 |
| | Proportion (mass %) of (B) in the total of (B) and (C) | | 33.3 | 20.0 | 14.3 | 25.0 | 40.0 | 62.5 | 25.0 | 14.3 |
| | Proportion (mass %) of (C) in the total of (B) and (C) | | 66.7 | 80.0 | 85.7 | 75.0 | 60.0 | 37.5 | 75.0 | 85.7 |
| Evaluation results | -20°C freezing test (quantity not cracked) | | 6 | 7 | 7 | 8 | 8 | 6 | 9 | 10 |
| | Low-temperature fracture resistance | | satisfactory | satisfactory | satisfactory | excellent | excellent | satisfactory | excellent | excellent |
| | 80°C tensile creep deformation (%) | | 1.1 | 1.2 | 1.3 | 1.4 | 1.6 | 1.7 | 1.2 | 1.1 |
| | High-temperature deformation resistance | | excellent | excellent | excellent | excellent | satisfactory | satisfactory | excellent | excellent |

**Table 2**

| Table 2 | | | Example 9 | Example 10 | Example 11 | Example 12 | Example 13 | Example 14 | Example 15 | Example 16 |
|---|---|---|---|---|---|---|---|---|---|---|
| Designation of PPS resin composition | | | (9) | (10) | (11) | (12) | (13) | (14) | (15) | (16) |
| Mixing Composition | (A) | PPS-3 | 100 | 100 | 100 | 100 | 100 | 100 | 100 | 100 |
| | (B) | Cu | 1.0 | | | 0.5 | 1.0 | 0.5 | 1.0 | 1.0 |
| | | Zn | | 1.0 | | | | | | |
| | | Ni | | | 1.0 | | | | | |
| | (C) | Ela | 3.1 | 3.1 | 3.1 | 2.1 | 2.1 | 1.0 | 1.0 | 3.1 |
| | Other | ADD-1 | 0.5 | 0.5 | 0.5 | 0.5 | 0.5 | 0.5 | 0.5 | |
| | Proportion (mass%) Proportion (mass %) of (B) in the total of (B) and (C) | | 25.0 | 25.0 | 25.0 | 20.0 | 33.3 | 33.3 | 50.0 | 25.0 |
| | Proportion (mass %) of (C) in the total of (B) and (C) | | 75.0 | 75.0 | 75.0 | 80.0 | 66.7 | 66.7 | 50.0 | 75.0 |
| Evaluation results | -20°C freezing test (quantity not cracked) | | 10 | 8 | 9 | 8 | 8 | 6 | 6 | 7 |
| | Low-temperature fracture resistance | | excellent | excellent | excellent | excellent | excellent | satisfactory | satisfactory | satisfactory |
| | 80°C tensile creep deformation (%) | | 1.1 | 1.1 | 1.0 | 0.9 | 0.9 | 0.7 | 0.7 | 1.2 |
| | High-temperature deformation resistance | | excellent | excellent | excellent | excellent | excellent | excellent | excellent | excellent |

**Table 3**

| Table 3 | | | Comparative example 1 | Comparative example 2 | Comparative example 3 | Comparative example 4 | Comparative example 5 | Comparative example 6 |
|---|---|---|---|---|---|---|---|---|
| Designation of PP9 resin composition | | | (H1) | (H2) | (H3) | (H4) | (H5) | (H6) |
| Mixing Composition | (A) | PPS-1 | 3.00 | 100 | 100 | 100 | 100 | 100 |
| | (C) | Ela | 3.1 | 5.3 | 7.6 | 3.1 | 3.1 | 3.3 |
| | Other | Silica | | | | 1.0 | | |
| | | GF | | | | | 1.0 | 5.5 |
| | | ADD-1 | 0.5 | 0.5 | 0.5 | 0.5 | 0.5 | 0.5 |
| | Proportion (mass %) of (B) in the total of (B) and (C) | | 0 | 0 | 0 | 0 | 0 | 0 |
| | Proportion (mass %) of (C) in the total of (B) and (C) | | 100 | 100 | 100 | 100 | 100 | 100 |
| Evaluation results | -20°C freezing test (quantity not cracked) | | 0 | 4 | 8 | 0 | 0 | 0 |
| | Low-temperature fracture resistance | | unsatisfactory | unsatisfactory | excellent | unsatisfactor | unsatisfactory | unsatisfactory |
| | 80°C tensile creep deformation (%) | | 1.8 | 2.6 | 3.1 | 1.6 | 0.6 | 0.2 |
| | High-temperature deformation resistance | | satisfactory | satisfactory | unsatisfactory | satisfactory | excellent | excellent |

**Table 4**

| Table 4 | | | Comparative example 7 | Comparative example 8 | Comparative example 9 | Comparative example 10 | Comparative example 11 |
|---|---|---|---|---|---|---|---|
| Designation of PPS resin composition | | | (H7) | (H8) | (H9) | (H10) | (H11) |
| Mixing Composition | (A) | PPS-1 | 100 | 100 | 100 | 100 | 100 |
| | (B) | Cu | 0.6 | 0.6 | 45.1 | 2.0 | |
| | (C) | Ela | 11.2 | 17.9 | 4.5 | | |
| | Other | ADD-1 | 0.6 | 0.6 | 0.8 | | |
| | Proportion (mass %) of (B) in the total of (B) and (C) | | 4.8 | 3.2 | 90.9 | 100 | -- |
| | Proportion (mass %) of (C) in the total of (B) and (C) | | 95.2 | 96.8 | 9.1 | 0 | -- |
| Evaluation results | -20°C freezing test (quantity not cracked) | | 10 | 10 | 0 | 2 | 0 |
| | Low-temperature fracture resistance, | | excellent | excellent | unsatisfactory | unsatisfactory | unsatisfactory |
| | 80°C tensile creep deformation (%) | | 3.3 | 4.1 | 0.1 | 1.2 | 1.1 |
| | High-temperature deformation resistance | | unsatisfactory | unsatisfactory | excellent | excellent | excellent |

The abbreviations in Table 1-Table 4 are as follows.
Cu: copper fine particle ("1020Y" manufactured by Mitsui Mining & Smelting Co., Ltd.; spherical, with an average particle size of 0.36 µm)
Zn: zinc fine particle ("F-2000" manufactured by Honjo Chemical Corporation; spherical, with an average particle size of 4 µm)
Ni: nickel fine particle ("SFR-Ni" manufactured by Nippon Atomized Metal Powders Corporation; spherical, with an average particle size of 10 µm)
Ela: acid anhydride-modified ethylene-butene copolymer ("TAFMER MH-7020" manufactured by Mitsui Chemicals, Inc.)
Silica: spherical silica ("FB-6D" manufactured by Denki Kagaku Kogyo K.K.; average particle size of 6 µm)
GF: glass fiber ("T-717H" manufactured by Nippon Electric Glass Co., Ltd.; fiber diameter of 10 µm)
ADD-1: cresol novolac type epoxy resin ("N-695P" manufactured by DIC Corporation)

Based on the foregoing evaluation results, one finds that the PAS resin composition of the present invention inhibits occurrence of cracking in freezing tests at -20°C, exhibiting satisfactory low-temperature fracture resistance. Moreover, tensile creep deformation at 80°C was 2% or less, and high-temperature deformation resistance was satisfactory, indicating suitability as a piping member for fluid through which high-temperature fluids flow at high pressure.

On the other hand, with respect to Comparative examples 1-3 that did not contain the metal fine particle (B), there was inhibition of cracking in the -20°C freezing test in proportion to the additive amount of the thermoplastic elastomer (C), while tensile creep deformation at 80°C increased, and low-temperature fracture resistance was problematic. With respect to Comparative examples 4-6 that made combined use of the elastomer (C) and glass fiber or silica, there was an effect of inhibiting tensile creep deformation at 80°C, but cracking occurred in all cases in the -20°C freezing test, and low-temperature fracture resistance was problematic.

With respect to Comparative examples 7 and 8 which were examples where the content of the thermoplastic elastomer (C) exceeds 8 mass parts relative to 100 mass parts of PAS resin which is the upper limit of the present invention, cracking was inhibited in the -20°C freezing test, but tensile creep deformation at 80°C was very large, and high-temperature deformation resistance was problematic. With respect to Comparative example 9 which was an example where the content of the metal fine particle (B) exceeds 5 mass parts relative to 100 mass parts of PAS resin which is the upper limit of the present invention, creep deformation at 80°C was inhibited, but the probability of occurrence of cracking in the -20°C freezing test was high, and high-temperature deformation resistance was problematic.

With respect to Comparative example 10 which does not contain the thermoplastic elastomer (C) and which only contains the metal fine particle (B), creep deformation at 80°C was inhibited, but the probability of occurrence of cracking in the -20°C freezing test was high, and high-temperature deformation resistance was problematic. With respect to Comparative example 11 which only has the PPS resin, tensile creep deformation at 80°C was low, but cracking occurred in all cases in the -20°C freezing test, indicating that low-temperature fracture resistance was problematic.

## Claims

1. A polyarylene sulfide resin composition, comprising: 100 mass parts of a polyarylene sulfide resin (A); 0.1 to 8 mass parts of a metal fine particle (B) containing at least one metal species selected from the group consisting of copper, nickel, and zinc; and 0.1 to 5 mass parts of a thermoplastic elastomer (C).

2. The polyarylene sulfide resin composition according to claim 1, wherein the mass ratio [(B)/(C)] of said metal fine particle (B) and thermoplastic elastomer (C) is in the range of 10/90 to 65/35.

3. The polyarylene sulfide resin composition according to claim 1, wherein average particle size of said metal fine particle (B) is 20 µm or less.

4. The polyarylene sulfide resin composition according to claim 1, wherein said polyarylene sulfide resin (A) has carboxyl groups or carboxyl group-derivative groups.

5. The polyarylene sulfide resin composition according to claim 1, wherein the thermoplastic elastomer (C) is an ethylene-α-olefin copolymer that has carboxyl groups.

6. The polyarylene sulfide resin composition according to claim 1, which contains 0.1 to 1 mass parts of epoxy resin relative to 100 mass parts of polyarylene sulfide resin (A), in addition to said metal fine particle (B) and thermoplastic elastomer (C).

7. Piping member for fluid, which is obtained by molding the polyarylene sulfide resin composition according to any of claims 1-6.
